# EUROPÄISCHE PATENTSCHRIFT

(11) **EP 0 429 567 B1**
(45) Veröffentlichungstag und Bekanntmachung des Hinweises auf die Patenterteilung: **08.09.1993**
(21) Anmeldenummer: 90904805.0
(22) Anmeldetag: 22.03.1990
(51) Int. Cl.: B25J 15/04

(54) **VORRICHTUNG ZUR LÖSBAREN KUPPLUNG VON GREIFERN ODER ENTSPRECHENDEN WERKZEUGEN AN ROBOTERARMEN**
DEVICE FOR THE RELEASABLE CONNECTION OF GRIPPING COMPONENTS OR CORRESPONDING TOOLS ON ROBOT ARMS
DISPOSITIF POUR COUPLER DE MANIERE LIBERABLE SUR DES BRAS DE ROBOT DES GRAPPINS OU DES OUTILS CORRESPONDANTS

(30) Priorität: 16.06.1989 DE 8907348 U
(43) Veröffentlichungstag der Anmeldung: 05.06.1991
(73) Patentinhaber: BUSCHULTE, Joachim, D-44287 Dortmund (DE)
(72) Erfinder: BUSCHULTE, Joachim, D-44287 Dortmund (DE)
(74) Vertreter: Patentanwälte Meinke, Dabringhaus und Partner
(86) Internationale Anmeldenummer: EP9000469
(87) Internationale Veröffentlichungsnummer: WO9015698

(56) Entgegenhaltungen:
- DE-A- 1 802 221
- DE-U- 1 972 790
- FR-A- 2 581 338
- GB-A- 2 134 965
- US-A- 2 781 199
- US-A- 4 261 266
- US-A- 4 520 550
- US-A- 4 655 630

## Beschreibung

Es sind aufwendige Flanschkonstruktionen zum Wechseln von Werkzeugen, wie Greifern od. dgl. an Roboterarmen bekannt, etwa durch die EP-O 139 978, die DE-A-36 33 357. Das manuelle Wechseln von Greifern und Werkzeugen ist derzeit, anders als beispielsweise bei spanabnehmenden Werkzeugen, an sich bekannt, in der Regel durch Schraubverbindungen an mehr oder weniger paßgenauen Flanschen gekennzeichnet. Eine gewisse Vereinfachung hat hier die Einführung der DIN 24601 (Handhabungsgeräte und Industrieroboter; mechanische Schnittstelle rund) gebracht. Bekannte automatische Wechseleinrichtungen sind vergleichsweise aufwendig. Die Konstruktionen sind auch so kostenintensiv, daß sie sich nur dann lohnen, wenn ein häufiger Werkzeugwechsel notwendig ist. Dem häufigen Werkzeugwechsel widerspricht umgekehrt bei nichtautomatischen Einrichtungen die vergleichsweise lange Rüstzeit, die mit diesen Lösungen einhergeht.

Ein zusätzliches Problem besteht darin, daß die mechanische Schnittstelle hohen dynamischen Belastungen standhalten muß. Sie muß sehr paßgenau ausgeführt werden, um der Präzision des Roboters nicht entgegenzustehen.

Aus der FR-A-2 581 338 ist ein automatisches Wechselsystem bekannt, bei dem ein federbelasteter Stößel von einem geschlitzten Verriegelungszylinder übergriffen wird, der eine Kegelausnehmung am Ende des Schlitzes aufweist. Um die Verriegelung zu bewirken, wird ein kegelstumpfförmiges Ende des Stößels mittels einer Verriegelungsfeder in die Kegelausnehmung eingefahren, die gesamte Last wird dabei auf die Kegelfläche übertragen und muß von dieser insgesamt aufgenommen werden. Zum Entriegeln wird der Stößel mit dem Kegelstumpf zurückverfahren. Diese bekannte Konstruktion ist vergleichsweise aufwendig und in ihrer Tragfähigkeit begrenzt.

Aufgabe der Erfindung ist daher die Schaffung einer Lösung, eine Wechselvorrichtung für Greifer od. dgl. am Roboterarm zu schaffen, die einfach in der Herstellung, hoch belastbar und überaus präzise ist.

Eine derartige Vorrichtung zeichnet sich erfindungsgemäß zur Lösung dieser Aufgabe dadurch aus, daß die Übergriffsnut erweitert wird, indem sie in eine im wesentlichen zylindrische Bohrung übergeht, daß der Sperrbolzen als Halbzylinderelement zum verriegelnden Einschwenken in die Bohrung ausgebildet ist und daß die zylindrische Bohrung in der Verriegelungslage relativ zum Halbzylinderelement des Sperrbolzens geringfügig exzentrisch zur Aufbringung einer Spannkraft beim Verriegeln angeordnet ist.

Erkennbar lassen sich die Flanschteile vergleichsweise einfach fertigen, Aufnahmeausnehmungen und Eingriffselement können in hoher Präzision und damit praktisch spielfrei gefertigt werden, der Sperrbolzen ist in ähnlicher Weise spielfrei zu lagern und einfach zu manipulieren.

Es ist auch möglich, die Sperrbolzen immer in einem Flanschteil zu belassen, das andere Flanschteil kann in der Entriegelungsstellung dann dank der Übergriffsnut ausgehoben werden, womit ein Greiferwechsel möglich gemacht wird.

Mit der Erfindung ist auch eine einfache schnelle Verriegelung und Entriegelung unter Beibehaltung optimalen Passitzes möglich. Ein unkomplizierter Wechsel von Greifern, Werkzeugen od. dgl. ermöglicht eine hohe Verfügbarkeit eines so ausgerüsteten Roboters. Bilden die Greifer Verschleißteile, so können sie einfach und schnell ausgewechselt werden, ohne daß zeitaufwendige Auswechselarbeiten an dieser Baugruppe durchgeführt werden müssen, was zu empfindlichen Produktionsausfällen führen kann.

Die Erfindung sieht in Ausgestaltung vor, daß der Sperrbolzen einen nach außen weisenden Handhabungsansatz und/oder eine Handhilfshebel aufweist. Mit dem Handhabungsansatz ist einfacher Weise ein "manuelles Wechselsystem" gegeben, welches beispielsweise mit Hilfe eines entsprechenden Schlüssels oder direkt durch den Handhilfshebel leicht betätigt werden kann. Automatische Spannmittel benötigen in der Regel Hilfsenergien, wie pneumatische Vorrichtungen oder hydraulische, eine Einführ- und Zentrierhilfe und dgl. mehr. Dies vermeidet die vorliegende Erfindung.

Um besonders hohe Kräfte aufnehmen zu können, sieht die Erfindung auch vor, daß das Eingriffselement im wesentlichen querschnittlich zylindrisch ausgebildet ist und die Aufnahmeausnehmung im korrespondierenden Flanschteil als zylindrische Bohrung ausgebildet ist, wobei insbesondere vorgesehen ist, daß das Eingriffselement mit wenigstens zwei die zylindrische Außenkontur nach außen übergreifenden Konturbereichen und die Bohrung mit korrespondierenden Ausnehmungen ausgebildet ist und/oder daß die die Zylinderkontur nach außen überragenden Bereiche als Halbzylinder und die entsprechenden Ausnehmungen im korrespondierenden Element als Zylinderbohrung ausgebildet sind.

Weitere Merkmale, Einzelheiten und Vorteile der Erfindung ergeben sich aus den sonstigen Unteransprüchen sowie aufgrund der nachfolgenden Beschreibung anhand der Zeichnungen. Diese zeigen in:
- Fig. 1: eine räumliche vereinfachte Darstellung eines Flanschteiles,
- Fig. 2: die räumlich vereinfachte Darstellung des korrespondierenden Flanschteiles,
- Fig. 3: eine Seitenaufsicht auf das erste Flanschteil gemäß Pfeil III in Fig. 1,
- Fig. 4: eine Explosionsdarstellung eines abgewandelten Ausführungsbeispieles des erfindungsgemäßen Flanschelementes mit Handhilfshebel sowie in
- Fig. 5: drei Positionen zwischen Roboter und Greifer.

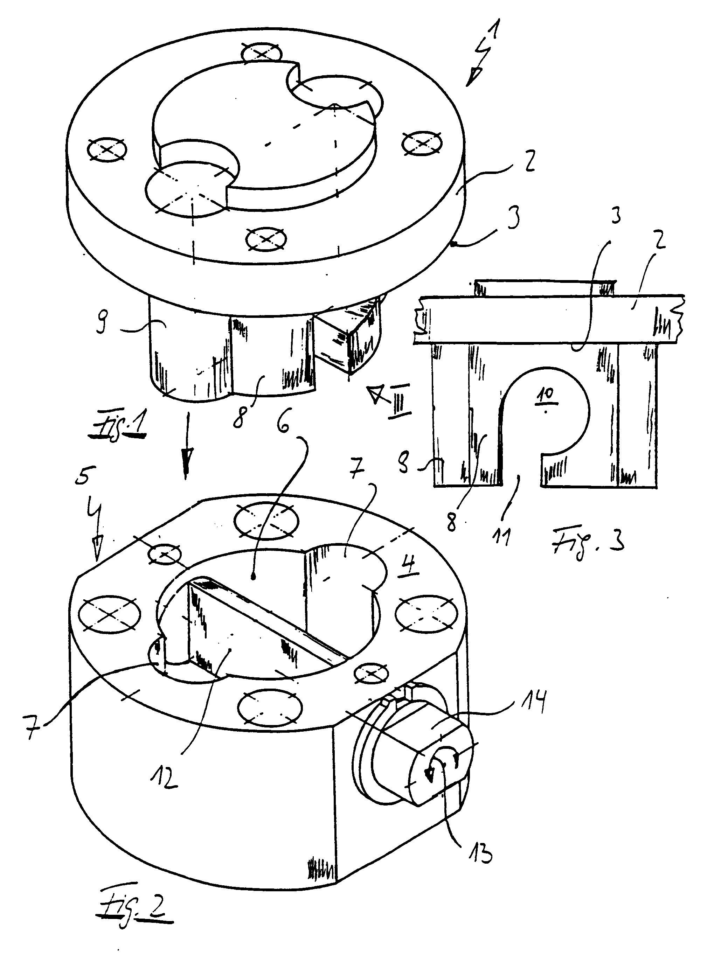

Das in Fig. 1 dargestellte erste Flanschelement, allgemein mit 1 bezeichnet, weist eine obere Auflageschulter 2 auf, mit einer unteren Auflagefläche 3, die sich paßgenau auf die obere Auflagefläche 4 des in Fig. 2 dargestellten anderen Flanschelementes, allgemein mit 5 bezeichnet, in der Verriegelungslage auflegt. Das Flanschelement 1 bzw. das untere Flanschelement 5 weisen Montagebohrungen zur Befestigung an den jeweiligen Greifern oder Roboterarmen 15 auf, die andeutungsweise in Fig. 5 wiedergegeben sind.

Das unten dargestellte Flanschelement 5 weist eine innere Aufnahmeausnehmung 6 auf, die im wesentlichen querschnittlich kreisringförmig ausgebildet ist, mit zwei halbkreisförmigen weiteren, die Außenkontur überragenden Bereichen 7, wie sich dies aus Fig. 2 ergibt. Damit formschlüssig zusammenpassend, weist das oben dargestellte Flanschelement 1 ein zentrisches Eingriffselement 8 auf, mit die kreisförmige Außenkontur nach außen überragenden Konturbereichen 9 als Halbzylinder. In der Verriegelungslage greifen die Konturbereiche 9 in die halbkreisförmigen zusätzlichen Ausnehmungen 7 im korrespondierenden Flanschelement 5 ein.

Senkrecht durchsetzt wird das Eingriffselement 8 von einer zylindrischen Bohrung 10 mit einer zur freien unteren Seite hinweisenden Übergriffsnut 11, während das andere Flanschelement 5 einen Sperrbolzen 12 dort verdrehbar gelagert (Pfeil 13) aufweist.

Der Sperrbolzen 12 ist als Halbzylinder gestaltet, wobei die offene Weite der Übergriffsnut 11 so gewählt ist, daß sie bei der entsprechenden Lage des Sperrbolzens 12 den Halbzylinder vollständig übergreifen kann. Es sei darauf hingewiesen, daß in Fig. 2 der Sperrbolzen 12 in der Verriegelungsstellung dargestellt ist, zum Überrasten des anderen Flanschelementes 1 müßte gemäß Pfeil 13 nach links um 180° verschwenkt werden.

Die zentrische Bohrung 10 kann geringfügig exzentrisch zum Verriegelungsbolzen 12 angebracht sein, derartig, daß es bei der Verriegelung zu einem Verpressen des Bolzenhalbzylinders in der Bohrung 10 kommt, so daß die untere Auflagefläche 3 am Flansch 2 fest auf die Auflagefläche 4 und Flanschelement 5 gepreßt wird. Hier ergibt sich sowohl eine achsiale wie radiale Verspannung.

Wie sich aus Fig. 2 ergibt, weist der Sperrbolzen 12 einen Handhabungsansatz 14 auf, der beispielsweise von einem Maulschlüssel übergriffen werden kann, um den Sperrbolzen zu betätigen.

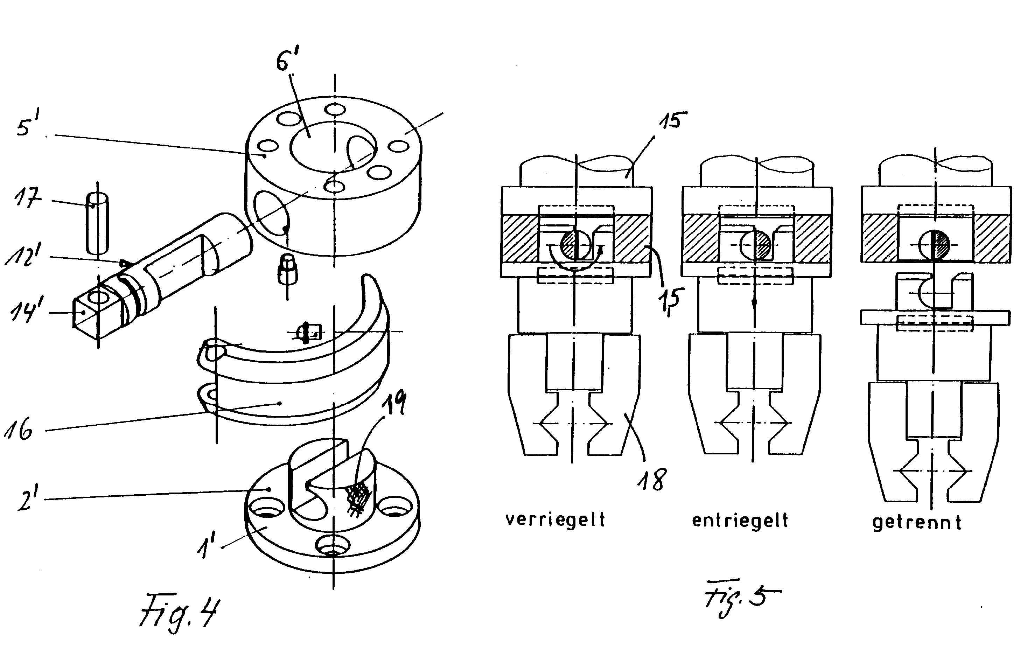

In Fig. 4 ist ein etwas abbgewandeltes Ausführungsbeispiel dargestellt, die Elemente sind mit den gleichen Bezugszeichen bezeichnet, allerdings ergänzt durch "'". Hier ist das am Roboterarm 15 befestigte Flanschelement 6' oben dargestellt mit dem Halbbolzen 12'. Der Halbbolzen 12' ist hier an seinem Handhabungsansatz 14' mit einem Handhilfshebel 16 versehen, der dort mit einem Schwenkbolzen 17 befestigt ist. Der Handhilfshebel kann in der Nichtgebrauchslage auf die Außenkontur des Flansches 5' aufgeschwenkt sein und ist damit platzsparend untergebracht. Wird er benötigt, wird er ausgeschwenkt und mit seiner Hilfe kann dann der Halbbolzen 12' verschwenkt werden.

Die drei Positionen verriegeln, entriegeln und die Trennposition ist in Fig. 5 dargestellt, der Roboterarm ist angedeutet und mit 15 bezeichnet, das entsprechende Greifwerkzeug trägt das Bezugszeichen 18.

Wenigstens eines der Flanschteile 2' bzw. 6' kann auf einer der Kontaktflächen mit einer Beschichtung aus einem elastischen Werkstoff versehen sein, dies ist gestrichelt in Fig. 4 angedeutet, eine solche Beschichtung trägt das Bezugszeichen 19. Damit lassen sich gewisse Toleranzen ausgleichen, d.h. die Ursprungsfertigung im Toleranzbereich bedarf nicht extremer Genauigkeit, der elastische Belag sorgt hier für den entsprechenden Ausgleich. Darüber hinaus kann, was nicht näher dargestellt ist, auch ein Spiel-Einstellelement , etwa eine Überwurfmutter mit einem entsprechenden Feingewinde vorgesehen sein.

Natürlich ist das beschriebene Ausführungsbeispiel der Erfindung noch in vielfacher Hinsicht abzuändern, ohne den Grundgedanken zu verlassen. So können die die Hauptkontur überragenden Bereiche 9 bzw. die entsprechenden Ausnehmungen 7 auch als eine Vielzahl von Längsnuten- und -federn ausgebildet sein, zusätzlich können Keilflächen zur festeren Verspannung der Elemente aneinander vorgesehen sein, als ovale Gleichdickkontur oder dgl. mehr. Natürlich sei ausdrücklich erwähnt, daß die Flanschelemente integrale Bestandteile der Greifer bzw. Roboterarme darstellen können, d.h. nicht zwingend als getrennte Bauteile ausgeführt werden müssen. Die Erfindung kann auch bei der Verbindung anderer Elemente als hier beschrieben eingesetzt werden, z.B. auch bei herkömmlichen Werkzeugmaschinen.

## Patentansprüche

1. Vorrichtung zur lösbaren Kupplung insbesondere von Greifern oder entsprechenden Werkzeugen an Roboterarmen aus zwei am Greifer- bzw. Roboterarm befestigbaren Flanschelementen (1, 5), wobei das eine Flanschelement (5) eine Aufnahmeausnehmung (6) und das andere Flanschelement (1) ein damit korrespondierendes Eingriffselement (8) aufweist, wobei in der Verriegelungslage das in die Ausnehmung eingesetzte Eingriffselement (8) und das korrespondierende Flanschteil (5) von einem Sperrbolzen (12) durchsetzt ist und wobei das Eingriffselement (8) mit einer Übergriffsnut (11) zum Übergreifen des Sperrbolzens (12) in der Montagelage ausgerüstet ist,
dadurch gekennzeichnet,
daß die Übergriffsnut (11) erweitert wird, indem sie in eine im wesentlichen zylindrische Bohrung (10) übergeht, daß der Sperrbolzen (12) als Halbzylinderelement zum verriegelnden Einschwenken in die Bohrung (10) ausgebildet ist und daß die zylindrische Bohrung (10) in der Verriegelungslage relativ zum Halbzylinderelement (12) des Sperrbolzens geringfügig exzentrisch zur Aufbringung einer Spannkraft bei Verriegeln angeordnet ist.

2. Vorrichtung nach Anspruch 1,
dadurch gekennzeichnet,
daß der Sperrbolzen (12) einen nach außen weisenden Handhabungsansatz (14) und/oder einen Handhilfshebel (16) aufweist.

3. Vorrichtung nach Anspruch 1 oder einem der folgenden,
dadurch gekennzeichnet,
daß das Eingriffselement (8) im wesentlichen querschnittlich zylindrisch ausgebildet ist und die Aufnahmeausnehmung (6) im korrespondierenden Flanschteil (5) als zylindrische Bohrung ausgebildet ist.

4. Vorrichtung nach einem der vorangehenden Ansprüche,
dadurch gekennzeichnet,
daß das Eingriffselement (8) mit wenigstens zwei die zylindrische Außenkontur nach außen übergreifenden Konturbereichen (9) und die Aufnahmeausnehmung (6) mit korrespondierenden Ausnehmungen (7) ausgebildet ist.

5. Vorrichtung nach Anspruch 4,
dadurch gekennzeichnet,
daß die die Zylinderkontur nach außen überragenden Bereiche (9) als Halbzylinder und die entsprechenden Ausnehmungen (7) im korrespondierenden Element als Zylinderbohrung ausgebildet sind.

6. Vorrichtung nach Anspruch 5,
dadurch gekennzeichnet,
daß das Eingriffsflanschteil (1) mit einer Auflageschulter (3) zur paßgenauen Anlage an der korrespondierenden Auflagefläche (4) des anderen Flanschelementes (5) ausgerüstet ist.

7. Vorrichtung nach einem der vorangehenden Ansprüche,
dadurch gekennzeichnet,
daß wenigstens ein Flanschteil (2 bzw. 5) mit einer Einrichtung (19) zum Ausgleich des Spiels bei Kontaktieren der Flanschteile ausgerüstet ist.

## Revendications

1. Dispositif pour coupler de manière libérable notamment des grappins ou des outils correspondants sur des bras de robots, constitué par deux éléments de bride (1, 5) pouvant être fixés au grappin ou au bras de robot, l'un (5) des éléments de bride comprenant un évidement de réception (6) et l'autre (1) des éléments de bride comprenant un élément de pénétration (8) correspondant, l'élément de pénétration (8) introduit dans l'évidement dans la position de verrouillage et l'élément de bride (5) correspondant étant traversés par une tige de blocage (12) et l'élément de pénétration (8) étant muni d'une rainure de recouvrement (11) destinée à recouvrir la tige de blocage (12) dans la position de montage,
caractérisé en ce que la rainure de recouvrement (11) est élargie en un alésage (10) sensiblement cylindrique, en ce que la tige de blocage (12) est constituée sous forme d'un élément semi-cylindrique pour pouvoir effectuer un mouvement pivotant de verrouillage dans l'alésage (6) et en ce que l'alésage cylindrique (10) est disposé de façon légèrement excentrée par rapport à l'élément semi-cylindrique (12) de la tige de blocage pour appliquer une force de serrage lors du verrouillage.

2. Dispositif selon la revendication 1,
caractérisé en ce que la tige de blocage (12) comprend un prolongement de manoeuvre (14) tourné vers l'extérieur et/ou un levier manuel auxiliaire (16).

3. Dispositif selon la revendication 1 ou 2,
caractérisé en ce que l'élément de pénétration (8) est de constitution sensiblement cylindrique en section transversale et l'évidement de réception (6) est constitué sous forme d'un alésage cylindrique dans la partie de bride (5) correspondante.

4. Dispositif selon l'une quelconque des revendications précédentes,
caractérisé en ce que l'élément de pénétration (8) comprend au moins deux zones (9) de son contour qui dépassent vers l'extérieur le contour cylindrique externe, et l'évidement de réception (6) comprend des évidements (7) correspondants.

5. Dispositif selon la revendication 4,
caractérisé en ce que les zones (9) qui font saillie vers l'extérieur du contour cylindrique sont constituées sous forme de demi-cylindres, et les évidements correspondants (7) de l'élément correspondant sont constitués sous forme d'alésages cylindriques.

6. Dispositif selon la revendication 5,
caractérisé en ce que la bride de pénétration (1) est munie d'un épaulement d'appui (3) qui s'applique avec précision sur la surface d'appui (4) correspondante de l'autre élément de bride (5).

7. Dispositif selon l'une quelconque des revendications précédentes,
caractérisé en ce qu'au moins un élément de bride (2 ou 5) est muni d'un dispositif (19) pour compenser le jeu lors du contact entre éléments de bride.

## Claims

1. A device for releasably coupling in particular grippers or corresponding tools to robot arms comprising two flange elements (1, 5) which can be fixed to the gripper or robot arm respectively, wherein the one flange element (5) has a receiving opening (6) and the other flange element (1) has an engagement element (8) corresponding thereto, wherein in the locking position the engagement element (8) which is inserted into the opening and the corresponding flange member (5) have a lock pin (12) passing therethrough and wherein the engagement element (8) is provided with an engagement groove (11) for engaging over the lock pin (12) in the assembly position, characterised in that the engagement groove (11) is enlarged by going into a substantially cylindrical bore (10), that the lock pin (12) is in the form of a semycylindrical element for locking pivotal movement into the bore (10) and that in the locking position the cylindrical bore (10) is arranged in slightly eccentric relationship relative to the semicylindrical element (12) of the lock pin to apply a clamping force in the locking operation.

2. A device according to claim 1 characterised in that the lock pin (12) has an outwardly facing operating projection (14) and/or an auxiliary manual lever (16).

3. A device according to claim 1 or one of the folloowing claim characterised in that the engagement element (8) is of substantially cylindrical cross-sectional configuration and the receiving opening (6) in the corresponding flange member (5) is in the form of a cylindrical bore.

4. A device according to one of the preceding claims characterised in that the engagement element (8) is provided with at least two contour regions (9) which project outwardly beyond the cylindrical external contour and the receiving opening (6) is provided with corresponding recesses (7).

5. A device according to claim 4 characterised in that the regions (9) which project outwardly beyond the cylindrical contour are in the form of semicylinders and the corresponding recesses (7) in the corresponding element are in the form of a cylindrical bore.

6. A device according to claim 5 characterised in that the engagement flange member (1) is provided with a support shoulder (3) for bearing with a precise fit against the corresponding support surface (4) of the other flange element (5).

7. A device according to one of the preceding claims characterised in that at least one flange member (2 or 5) is provided with a means (19) for compensating for play when the flange members come into contact.
